# EUROPÄISCHE PATENTSCHRIFT

(11) **EP 4 212 972 B1**
(45) Veröffentlichungstag und Bekanntmachung des Hinweises auf die Patenterteilung: **28.01.2026**
(21) Anmeldenummer: 22212884.5
(22) Anmeldetag: 12.12.2022
(51) Int. Cl.: G05B 19/042

(54) **VERFAHREN ZUR ÄNDERUNG VON SOFTWAREDATEN EINES FELDGERÄTES UND EINE EIN SOLCHES FELDGERÄT UMFASSENDE ANLAGE**
METHOD FOR CHANGING SOFTWARE DATA OF A FIELD DEVICE AND A SYSTEM COMPRISING SUCH A FIELD DEVICE
PROCÉDÉ DE MODIFICATION DE DONNÉES LOGICIELLES D'UN APPAREIL DE TERRAIN ET INSTALLATION COMPRENANT UN TEL APPAREIL DE TERRAIN

(30) Priorität: 13.01.2022 DE 102022100708
(43) Veröffentlichungstag der Anmeldung: 19.07.2023
(73) Patentinhaber: Turck Holding GmbH, 58553 Halver (DE)
(72) Erfinder: Bauer-Wesely, Michael, 08344 Grünhain- Beierfeld (DE); Seliger, Christian, 08315 Lauter- Bernsbach (DE)
(74) Vertreter: DTS Patent- und Rechtsanwälte PartmbB

(56) Entgegenhaltungen:
- DE-A1- 102016 124 146
- DE-A1- 102017 130 138
- DE-A1- 102019 116 209

## Beschreibung

Die vorliegende Erfindung betrifft ein Verfahren zur Datenänderung eines Feldgerätes und eine Anlage .

Im Stand der Technik sind Verfahren bekannt, bei denen elektrische Geräte über ein mobiles Endgerät wie ein Smartphone oder ein Tablet-Computer gesteuert werden kann.

Aus der EP 3 271 785 ist beispielsweise ein externes Steuermodul als Smartphone oder Tablet-Computer bekannt, dass zum Austauschen von Daten mit einem HMI einer Maschine dient, wobei das HMI zur Benutzereingabe von Steuerungsbefehlen an die Maschine dient und wobei das externe Steuermodul so konfiguriert ist, dass es drahtlos mit dem HMI verbunden werden kann, um mit dem HMI wenigstens einen HMI-Datensatz auszutauschen. Hierbei ist das externe Steuermodul ein Mobiltelefon oder ein Tablet-Computer, welches so konfiguriert ist, dass eine spezielle Anwendung auf dem externen Steuermodul installiert ist, die mit dem HMI oder der Maschine über eine drahtlosen Kommunikationsverbindung oder eine Mobilfunkverbindung kommunizieren kann, die spezielle Anwendung auf dem externen Steuermoduls eingerichtet ist, um wenigstens einen HMI-Datensatz zu erstellen und an das HMI oder die Maschine zu übertragen.

Ein weiteres Verfahren zeigt beispielsweise die DE 10 2016 223 411 A1, bei dem zum Betreiben einer Produktionsanlage automatisch ausführbare Schritte und manuell an verschiedenen Elementen der Anlage auszuführende Schritte umfasst sind. Es sind hierbei an mindestens einem der verschiedenen Feldelemente maschinenlesbare Informationen angebracht, die das jeweilige Element identifizieren, wobei in einer Recheneinheit den manuell auszuführenden Schritten jeweils ein Durchführungsstatus zugeordnet ist, der unter der Bedingung auf "durchgeführt" gesetzt wird, und dass mittels eines mobilen Endgeräts die maschinenlesbare Informationen an mindestens einem vorgegebenen Element ausgelesen werden, und wobei eine Steuereinrichtung die automatisch ausführbaren Schritte unter Berücksichtigung des Durchführungsstatus vornimmt. Hierbei können die maschinenlesbaren Informationen optisch auslesbare Informationen, wie beispielsweise ein Strichcode oder ein QR-Code darstellen.

Diese Verfahren haben den Nachteil, dass Verwechslungen und Fehleingaben möglich sind, wenn der Bediener sich vor einer Vielzahl gleichartiger Feldgeräte befindet oder sich zur Bearbeitung der Daten entfernt und ggf. die Zuordnung zum jeweiligen Feldgerät verloren geht.

Aus der DE 2016 124 146 A1 ist ein Verfahren zur Inbetriebnahme oder Wartung eines Feldgeräts der Automatisierungstechnik bekannt. In der D2 DE 10 2017 130 138 A1 wird ein Verfahren zur vereinfachten Inbetriebnahme eines Feldgeräts vorgeschlagen. Die DE 10 2019 116 209 A1 schließlich gibt ein Verfahren zum Aktivieren oder Deaktivieren zumindest einer Hardware- und/oder Softwarefunktionalität einer Automatisierungskomponente an.

Es ist die Aufgabe der vorliegenden Erfindung ein verbessertes Verfahren zur Datenänderung eines Feldgerätes bereitzustellen.

Diese Aufgabe wird erfindungsgemäß gelöst durch ein Verfahren nach den Merkmalen des Anspruchs 1 und einer Anlage nach den Merkmalen des Anspruches 12.

Vorteilhafte Ausgestaltungen sind in den jeweiligen, zugehörigen Unteransprüchen angegeben.

Danach wird die Aufgabe gelöst durch ein Verfahren zur Änderung von Softwaredaten eines Feldgerätes, wobei das Feldgerät ein ein- oder mehrseitiges Gehäuse aufweist und auf oder an dem Gehäuse ein von einem Bediener mit einem mobilen Endgerät erfassbarer Gerätecode aufgebracht ist. Dieser Gerätecode ist als Präsenz-Gerätecode ausgebildet, was meint, dass zu dessen Erfassung die physische Anwesenheit des mobilen Endgerätes im Nahbereich erforderlich ist. Weiterhin meint auf oder an dem Gehäuse auch im Inneren oder außerhalb des Sichtfeldes oder des direkten Zugriffs eines Bedieners, wie beispielsweise hinter einer Wand oder Abdeckung, abhängig von der technischen Wirkweise des Gerätecodes und dessen Interaktion mit dem mobilen Endgerät.

Durch einen ersten Identifikationsschritt erfolgt das Erfassen des Gerätecodes mit einer Leseeinheit eines mobilen Endgerätes, wodurch primäre Gerätedaten vom Feldgerät empfangen und/oder aus einem (zentralen) Datenspeicher entnommen werden, wobei das Feldgerät direkt oder durch eine übergeordnete Geräteeinheit aktiviert wird, wobei in mindestens einem nachfolgenden Anpassungsschritt die primären Gerätedaten zu sekundären Gerätedaten gewandelt werden.

Diese Wandlung der primären Daten in sekundäre Daten ist nicht einschränkend zu verstehen und kann darin bestehen, dass ein vollständiger Satz von auszutauschenden und/oder zu überschreibenden Daten manuell oder halbmanuell erfolgt. Weiterhin kann diese Wandlung auch in der manuellen Veränderung von einzelnen Werten oder Zustandsangaben bestehen. Hierbei kann die Wandlung der Daten unmittelbar auf bzw. durch das mobile Endgerät erfolgen. Alternativ oder ergänzend kann das mobile Endgerät als Remote-Desktop dienen und die Selektion und/oder das Processing der primären Gerätedaten und/oder der sekundären Gerätedaten auf einem verbundenen zentralen Rechner oder Server erfolgen.

Schließlich erfolgt in einem Komplettierungsschritt die Komplettierung der Änderung, der definiert ist durch die erfolgte, dauerhafte Nutzung der sekundären Gerätedaten im Feldgerät. Hierbei erfolgt vor der Komplettierung der Änderung ein obligatorischer zweiter Identifikationsschritt über eine weitere Erfassung eines Gerätecodes, und wobei insbesondere nachfolgend zum zweiten Identifikationsschritt sekundäre Gerätedaten an das Feldgerät vom mobilen Endgerät übermittelt werden. Dies bedeutet, dass insbesondere vor der Durchführung des zweiten Identifikationsschrittes ein Schreiben von Daten auf das Feldgerät verhindert wird.

Durch diese lokale zweite Identifikation des mobilen Endgerätes am jeweiligen Feldgerät vor der Übermittlung von sekundären Gerätedaten, ist die Sicherheit der korrekten Datenübermittlung wesentlich erhöht und weiterhin können verkabelte, lokale HMI eingespart werden, ohne Zugeständnisse an die Datensicherheit zu machen.

Hierbei meint Feldgerät insbesondere elektronische Schaltschrankmodule, wie IO-Link-Geräte oder IO-Link-Master, aber auch einfache Feldsensoren oder Feldaktoren einer größeren Anlage.

Der Datenaustausch des mobilen Endgerätes mit dem Feldgerät erfolgt in der Regel mittelbar über eine zentrale Steuer- und Regelungseinheit, mit welcher ein drahtloser Datenaustausch möglich ist und welche direkt oder mittelbar datenleitend mit dem jeweiligen Feldgerät verbunden ist. Bei einem vorteilhaften Verfahren ändert der Bediener die primären Gerätedaten im mobilen Endgerät (Tablet-Computer, Smartphone (App)) und/oder direkt in einer Server- oder Cloudanwendung des Anlagenbetreibers und/oder des Herstellers, beziehungsweise ruft die geeigneten sekundären Gerätedaten für die später Übermittlung auf und passt diese ggf. in geeigneter Weise an. Dies heißt insbesondere, der Bediener kann bei einer Ausführungsform des Verfahrens in diesem Schritt außerhalb des Feldgerätes Daten auf- bzw. vorbereiten und diese dann anschließend an das Feldgerät übermitteln.

Die eigentliche Datenübergabe an das Feldgerät erfolgt entweder unmittelbar zwischen Smartphone und Feldgerät, insbesondere drahtlos, oder drahtlos über ebendiesen Server bzw. die Cloud oder ein drahtlos kommunikationsfähiges, übergeordnetes Modul, welche datenleitend mit dem Feldgerät verbunden sind. Diese sprechen direkt oder mittelbar über entsprechende Kommunikationsnetzwerke (Ethernet, Feldbus, IO-Link, SPE oder dergleichen) das Feldgerätes zum Zwecke der Übernahme der sekundären Gerätedaten an.

Somit sind unter einer "zentralen Steuer- und Regelungseinheiten" solche Server- oder Cloudanwendung und/oder ein solches übergeordnetes Modul zu versehen.

Bei einer Verfahrensvariante erfolgt die weitere Erfassung eines Gerätecodes über denselben Gerätecode, wie in dem ersten Identifikationsschritt, wobei alternativ oder zusätzlich der zweite Identifikationsschritt auch über einen weiteren Gerätecode erfolgen kann, der unterschiedlich zum ersten Gerätecode ist.

Insgesamt ist "Gerätecode" nicht einschränkend zu verstehen und meint jede Art eines Präsenz-Gerätecodes, der mindestens als einer der folgenden Codearten ausgebildet ist, wie beispielsweise
- ein optisch erfassbarer, passiver Code, insbesondere ein 2D-Code, wie beispielsweise ein Strichcode (Barcode), ein QR-Code^{®},
- ein optisch erfassbarer, aktiver Code, insbesondere ein schaltbares Leuchten oder ein Leuchtmuster, Leuchtfarbe/n, wie beispielsweise von ein oder mehreren Leuchtbirne ,LEDs ,OLEDs etc. erzeugbar,
- ein akustischer Code, wie beispielsweise ein Einzelton, eine Tonfolge in einer oder unterschiedlichen Tonhöhen und/oder Tonlängen etc. oder
- ein induktiver Nahfeldcode (Near Field Code NFC), insbesondere ein passiver Transmitter (passiver NFC-Tag).

Der akustische Code kann über einen integrierten Lautsprecher oder über Schwingungen von Komponenten des Feldgerätes erzeugt werden, wie beispielsweise das Brummen von geeignet angeregten Spulen, einem Motor oder dergleichen. Ob es vorteilhaft ist, den akustischen Code im hörbaren oder nichthörbaren Bereich vorzusehen, hängt sehr stark von den jeweiligen räumlichen Gegebenheiten ab. Wenn es nötig ist, den Bediener in sehr komplexen Anlagenaufbauten zu führen, ist ein für den Benutzer hörbares Signal bzw. Gerätecode in der Regel von Vorteil.

Eine weitere Verbesserung des Verfahrens besteht darin, dass der ersten Identifikationsschritt vor der Durchführung des zweiten Identifikationsschrittes für zwei oder mehr Feldgeräte nacheinander vorgenommen wird. Der nachfolgenden zweite Identifikationsschritt und die Übermittlung von sekundären Gerätedaten vom mobilen Endgerät an ein einzelnes Feldgerät, wird nachfolgend jeweils vollständig nacheinander an einem einzelnen Feldgerät vorgenommen. Anders ausgedrückt können Gerätedaten für baugleiche Feldgeräte wie elektronische Schaltschrankkomponenten gemeinsam und als Gruppe vorgenommen werden, allerdings muss die Komplettierung der Datenübernahmen einschließlich des zweiten Identifikationsschrittes einzeln vorgenommen werden. Damit ist immer sichergestellt, dass Daten vollständig und korrekt übermittelt werden.

Erfindungsgemäß erfolgt unmittelbar vor oder nach der Übernahme der sekundären Gerätedaten von dem Feldgerät und vor der Komplettierung mindestens ein Verifikationsschritt, in dem vom Feldgerät ein für das mobile Endgerät und/oder den Benutzer erfassbares physikalisches Signal gesendet wird, insbesondere ein Licht und/oder ein Tonsignal. Mit diesem physikalischen Signal wird die korrekte Übernahme der sekundären Gerätedaten angezeigt und vom Feldgerät quittiert. Das physikalische Signal kann auch zur Identifikation des Feldgeräts genutzt werden, bevor die sekundären Daten übertragen werden und als Bereitschaftsanzeige zum Datenempfang vom Feldgerät genutzt werden.

Hierbei meint "unmittelbar", dass dieser Verifikationsschritt und damit der Versand des physikalischen Signals innerhalb von wenigen Sekunden, idealerweise in weniger als zwei Sekunden erfolgt, wenn eine erfolgte oder beabsichtigte Übergabe von sekundären Gerätedaten vom Feldgerät erkannt wurde.

Dieses physikalische Signal kann in einem Lichtsignal bestehen, das
- von einer einzelnen Leuchte, wie vorsehend ausgeführt und nachfolgend hierfür immer LED genannt, oder einer Gruppe von Leuchten (LEDs) an oder auf dem Gehäuse des Feldgerätes ausgesendet wird und/oder in einer Blickfrequenz, einer Farbe (Wellenlänge), einer Anzahl von erstrahlenden LEDs und/oder einer Kombination hieraus.
- von dem TX/RX-LED an dem Ethernet-Stecker ausgesendet wird, wie einem RJ45-Stecker am Feldgerät. Idealerweise werden über so einen optischen Kanal Informationen an das mobile Endgerät gesendet, die von diesem gelesen werden können.

Das physikalische Signal kann auch in einem Tonsignal bestehen, das über eine vom mobilen Endgerät erfassbare Frequenz vom Feldgerät ausgesendet wird. Als Quelle kann hierbei beispielsweise eine angeregte Spule, ein Motorgeräusch (Brummen), das getaktete Öffnen und Schließen von Aktoren in einer SOLL-Frequenz dienen. Zusätzlich oder ergänzend kann eine Frequenz über einen Lautsprecher des Feldgerätes ausgesendet werden. Idealerweise liegen die Frequenzen im nichthörbaren Bereich und werden über eine entsprechende Erfassungseinrichtung vom mobilen Endgerät detektiert.

Das konkrete Signal wird dabei von einem übergeordneten Geräteeinheit also Steuerbefehl veranlasst oder ist als Steuerbefehl mindestens temporär in dem Feldgerät gespeichert.

Die Verifikation kann darin bestehen, dass der so übermittelte Wert, wie Anzahl der LED-Leuchten, Blickhäufigkeit etc. im mobilen Endgerät in der zugehörigen Anwendung (Application) eingegeben und ggf. an die übergeordnete Geräteeinheit gesendet werden muss, bevor die Komplettierung erfolgen kann. Analog zu einem TAN-Generator kann auch ein numerischer Code auf dem mobilen Endgerät erscheinen, der in definierte Weise genutzt werden muss.

Zur Erhöhung der Sicherheit kann dem vorgenannte ersten Verifikationsschritt ein zweiter Verifikationsschritt erfolgt, mit demselben physikalischen Signal und
- demselben Code und/oder Codefolge oder
- einem unterschiedlichen Code oder Codefolge. Alternativ kann ein physikalisch unterschiedliches Signal und
- ein neuer Code und/oder eine neue Codefolge oder
- derselbe Code und/oder dieselbe Codefolge
vorgesehen werden.

Somit besteht ein weiter verbessertes Verfahren darin, dass vor dem ersten und/oder dem zweiten Verifikationsschritt von dem Feldgerät ein Prüfdatensatz beispielsweise in Form einer Prüfsumme, eines Codes oder eines Hash-Wertes an eine übergeordnete Geräteeinheit gesendet wird, welcher von der übergeordneten Geräteeinheit mit SOLL-Prüfdaten verglichen werden und bei Übereinstimmung ein Bestätigungsdatensatz zurück an das Feldgerät gesendet wird, und wobei nur nach dem Erhalt des Bestätigungsdatensatzes durch das Feldgerät, der erste, zweite Verifikationsschritt und/oder Komplettierungsschritt vom Feldgerät veranlasst wird. Damit kann von der übergeordneten Geräteeinheit ein erwarteter Änderungswert überprüft und final freigegeben werden.

Bei einem weiter verbesserten Verfahren kann der zweite oder ein weiterer Verifikationsschritt auch darin bestehen, dass der Bediener insbesondere in Abhängigkeit von der Relevanz einer im ersten oder zweiten Identifikationsschritt indizierten, beabsichtigten Änderung der Primärdaten, einen persönlichen Berechtigungscode in dem mobilen Endgerät und der jeweiligen Anwendung (Application) eingeben muss, bevor die Komplettierung erfolgt. Anders beschrieben ist es vorteilhaft, wenn vor dem ersten und/oder dem zweiten Verifikationsschritt von dem Bediener eine Bediener-ID an eine übergeordnete Geräteeinheit gesendet werden muss, die von der übergeordneten Geräteeinheit mit einem SOLL-Bediener-ID verglichen wird, und wobei nach Übereinstimmung von der übergeordneten Geräteeinheit eine Freigabe zur Durchführung des jeweiligen Verifikationsschrittes gesendet wird. Diese Bediener-ID kann sich auf eine persönliche Qualifikation, eine Bearbeitungshistorie, eine sonstige Berechtigung oder einen sonstigen Analgenparameter beziehen.

Im Falle von großen Anlagen oder Baugruppen mit einer großen Anzahl gleichförmiger Bauteile kann die Identifikation im Feld schwierig sein. Ein verbessertes Verfahren besteht somit darin, dass vor einem Identifikationsschritt von dem Feldgerät ein von einem Bediener und/oder dem mobilen Endgerät erfassbares physikalisches Hinweissignal gesendet wird, wobei dieses Hinweissignal insbesondere zur Lokalisierung des Feldgerätes für den Bediener dient. Dieses physikalische Signal kann insbesondere in einem oder mehreren der vorstehend beschriebenen Licht- oder Tonsignalen bestehen.

Das Verfahren kann dahingehend weiter verbessert werden, indem ein BLE-Scan vorgenommen wird (Bluetooth Low Energy-Scan) anstatt des optischen Scans oder zusätzlich hierzu.

Von der Erfindung ist weiterhin eine Anlage umfasst, die mindestens ein Feldgeräte und mindestens eine übergeordnete Geräteeinheit aufweist, welche mit dem mindestens einen Feldgerät verbunden ist. Diese weist weiterhin mindestens eine Steuereinheit und mindestens einen Datenspeicher auf, wobei die Anlage ausgebildet ist, das Verfahren nach einem der vorgenannten Ausführungsformen durchzuführen.

Dabei kann die übergeordnete Geräteeinheit mit der Steuereinheit und/oder dem Datenspeicher datenleitend verbunden sein oder diese sind einzeln oder gemeinsam integraler Bestandteil der übergeordneten Geräteeinheit. Die übergeordnete Geräteeinheit kann beispielsweise ein IO-Link-Master oder ein vergleichbares elektronische Bauteil sein, das mit einer Mehrzahl von Feldgeräten verbunden ist und diese steuert.

Bei einem beispielhaften Verfahren werden die folgenden Schritte durchlaufen:
- Scan des ersten Gerätecodes als QR-Codes des zu koppelnden Feldgerätes als erster Identifikationsschritt (Read-Funktion).
- Das so gescannte Feldgerät wird auf dem Display des mobilen Endgerätes angezeigt (Show-Funktion).
- Auswahl des Feldgerätes im Display bzw. mittels Displayeingabe bei der Erfassung einer Mehrzahl von Feldgeräten.
- Anzeige der relevanten Geräteinformationen, wie Prozesswerte, Diagnosedaten, Datenblätter, Parameter etc. (Select-Funktion).
- Durchführung eines ersten Verifikationsschrittes auf Basis der persönlichen Berechtigungen (Right-Funktion), indem eine im mobilen Endgerät hinterlegte Bediener-ID mit einer zentral hinterlegten SOLL-ID verglichen wird:
   a) Level 1: Grundfunktion als reine Ansichtsfunktion
   b) Level 2: analog Level 1 mit Berechtigung von prozessrelevanten Parameteränderungen
   c) Level 3: analog Level 2 mit Berechtigung zur Veranlassung von bspw. Updates und/oder übergeordneter struktureller Änderungen.
- Wandlung der primären Gerätedaten in sekundäre Gerätedaten in Abhängigkeit von dem Level 1 bis 3 durch den Bediener.
- Zweite Scan des ersten (einen) Gerätecodes oder eines zweiten Gerätecodes als zweiter Identifikationsschritt.
- Übernahme der sekundären Gerätedaten vom Feldgerät (Write-Funktion).
- Versand eines Hash-Wertes vom Feldgerät an eine übergeordnete Geräteeinheit.
- Bestätigung des Hash-Wertes vom der übergeordneten Geräteeinheit an das Feldgerät.
- Durchführung des Komplettierungsschrittes im/vom Feldgerät.

Wesentlich bei dem Verfahren ist hierbei, dass insbesondere vor dem Ablegen (Schreiben) und/oder Aktivieren von sekundären Gerätedaten auf dem Feldgerät, eine eindeutige, zweite Identifizierung zwischen demselben mobilen Endgerät und dem Feldgerät erfolgen muss. Somit ist es insbesondere vorteilhaft, wenn eine Geräte-ID, wie eine MAC-Adresse bei dem ersten Identifikationsschritt mindestens temporär in dem Feldgerät oder einer übergeordneten Geräteeinheit gespeichert wird.

Bei dem vorgenannten Verfahren sind die Feldgeräte 10-Link-Module in einem Schalt- und Steuerschrank, wobei die Gerätecodes als 7,5x7,5 mm große QR-Codes an der schmalen Frontfläche aufgebracht oder aufgedruckt sind, die mit einem üblichen QR-Codescanner eines Smartphones oder Tablet-Computer digital lesbar sind.

## Patentansprüche

1. Verfahren zur Änderung von Softwaredaten eines Feldgerätes, wobei das Feldgerät ein mehrseitiges Gehäuse aufweist, wobei auf oder an dem Gehäuse ein von einem Bediener mit einem mobilen Endgerät erfassbarer erster Gerätecode aufgebracht ist, welcher als Präsenz-Gerätecode ausgebildet ist, der zur Erfassung die physische Anwesenheit des mobilen Endgerätes im Nahbereich erfordert, wobei durch einen ersten Identifikationsschritt das Erfassen des ersten Gerätecodes mit einer Leseeinheit eines mobilen Endgerätes erfolgt, wodurch
- mittels des mobilen Endgerätes primäre Gerätedaten vom Feldgerät empfangen und/oder aus einem zentralen Datenspeicher einer übergeordneten Geräteeinheit entnommen werden, wobei das Feldgerät direkt oder durch die übergeordnete Geräteeinheit aktiviert wird, wobei mittels des mobilen Endgeräts und/oder mittels eines damit verbundenen zentralen Rechners oder Servers in mindestens einem Anpassungsschritt die primären Gerätedaten zu sekundären Gerätedaten gewandelt werden, und das Verfahren **dadurch gekennzeichnet ist, dass** in einem Komplettierungsschritt die Komplettierung durch Ablegen und/oder Aktivieren der sekundären Gerätedaten auf dem Feldgerät erfolgt, wobei vor der Komplettierung ein obligatorischer zweiter Identifikationsschritt erfolgt über eine weitere Erfassung eines zweiten Gerätecodes mittels des mobilen Endgerätes, wobei nachfolgend zum zweiten Identifikationsschritt die sekundären Gerätedaten an das Feldgerät vom mobilen Endgerät übermittelt werden und vor der Durchführung des zweiten Identifikationsschritt ein Schreiben von Daten auf das Feldgerät verhindert wird, wobei nach einer Übernahme der sekundären Gerätedaten durch das Feldgerät und vor der Komplettierung mindestens ein erster Verifikationsschritt erfolgt, in dem mittels des Feldgerätes ein für das mobile Endgerät erfassbares physikalisches Signal gesendet wird, mittels welchem die korrekte Übernahme der sekundären Gerätedaten von dem Feldgerät quittiert werden.

2. Verfahren nach Anspruch 1, **dadurch gekennzeichnet, dass** der erste sowie der zweite Gerätecode mindestens als einer der folgenden Codearten ausgebildet ist:
- optisch erfassbarer, passiver Code,
- optisch erfassbarer, aktiver Code,
- akustisch erfassbarer Code oder
- induktiver Nahfeldcode.

3. Verfahren nach einem der vorherigen Ansprüche, **dadurch gekennzeichnet, dass**
vor der Durchführung des zweiten Identifikationsschrittes der erste Identifikationsschritt für zwei oder mehr Feldgeräte nacheinander vorgenommen wird, wobei der zweite Identifikationsschritt und die Übermittlung von sekundären Gerätedaten vom mobilen Endgerät an ein einzelnes Feldgerät jeweils vollständig nacheinander vorgenommen werden muss.

4. Verfahren nach Anspruch 1, **dadurch gekennzeichnet, dass** das physikalische Signal ein Licht- und/oder Tonsignal ist, wobei
a) das Lichtsignal
- von einer einzelnen Leuchte bzw. LED oder einer Gruppe von Leuchten bzw. LEDs an oder auf dem Gehäuse des Feldgerätes ausgesendet wird, oder
- von LED-Leuchten an einem Stecker ausgesendet wird, beziehungsweise
b) als Quelle des Tonsignals eine angeregte Spule, ein Motorgeräusch bzw. Brummen oder ein getaktetes Öffnen und Schließen von Aktoren in einer SOLL-Frequenz dient, und/oder eine Frequenz über einen Lautsprecher des Feldgerätes ausgesendet wird.

5. Verfahren nach Anspruch 4, **dadurch gekennzeichnet, dass** nach dem ersten Verifikationsschritt ein zweiter Verifikationsschritt erfolgt, mit
- demselben physikalischen Signal und demselben Code und/oder derselben Codefolge,
- demselben physikalischen Signal und einem unterschiedlichen Code oder einer unterschiedlichen Codefolge,
- einem physikalisch unterschiedlichen Signal und demselben Code und/oder derselben Codefolge oder
- einem physikalisch unterschiedlichen Signal und einem neuen Code oder einer neuen Codefolge.

6. Verfahren nach Anspruch 5, **dadurch gekennzeichnet, dass** vor dem ersten und/oder dem zweiten Verifikationsschritt von dem Feldgerät ein Prüfdatensatz an eine übergeordnete Geräteeinheit gesendet wird, welcher von der übergeordneten Geräteeinheit mit SOLL-Prüfdaten verglichen wird, und dass bei Übereinstimmung ein Bestätigungsdatensatz an das Feldgerät gesendet wird, wobei nur nach dem Erhalt des Bestätigungsdatensatzes durch das Feldgerät der erste oder zweite Verifikationsschritt und/oder der Komplettierungsschritt vom Feldgerät veranlasst wird.

7. Verfahren nach einem der vorherigen Ansprüche, **dadurch gekennzeichnet, dass** vor dem ersten Identifikationsschritt von dem Feldgerät ein von einem Bediener und/oder mobilen Endgerät erfassbares physikalisches Hinweissignal gesendet wird, wobei dieses Hinweissignal insbesondere zur Lokalisierung des Feldgerätes im Raum für den Bediener dient.

8. Verfahren nach Anspruch 5 oder 6, **dadurch gekennzeichnet, dass** vor dem ersten und/oder dem zweiten Verifikationsschritt von dem Bediener eine Bediener-ID an eine übergeordnete Geräteeinheit gesendet werden muss, die von der übergeordneten Geräteeinheit mit einem SOLL-Bediener-ID verglichen wird, wobei nach Übereinstimmung von der übergeordneten Geräteeinheit eine Freigabe zur Durchführung des jeweiligen Verifikationsschrittes, des zweiten Identifikationsschrittes oder des Komplettierungsschrittes gesendet wird.

9. Verfahren nach Anspruch 2, **dadurch gekennzeichnet, dass** der optisch erfassbare, passive Code als ein 2D-Code, ein Strichcode oder ein QE-Code ausgebildet ist.

10. Verfahren nach Anspruch 2, **dadurch gekennzeichnet, dass** der induktive Nahfeldcode als ein passiver Transmitter ausgebildet ist.

11. Verfahren nach Anspruch 4, **dadurch gekennzeichnet, dass** das Lichtsignal als eine LED-Anzahl, eine LED-Blickfrequenz, eine LED-Farbe und/oder eine Kombination hieraus auf dem Gehäuse gesendet wird; und/oder
als LED-Leuchten an einem Ethernet-Stecker oder einem RJ45-Stecker erfolgt; und/oder
das Tonsignal durch ein Öffnen und Schließen von Aktoren in einer SOLL-Frequenz erfolgt.

12. Anlage umfassend mindestens ein Feldgerät und mindestens eine übergeordnete Geräteeinheit, welche mit dem mindestens einen Feldgerät verbunden ist, **dadurch gekennzeichnet, dass** mindestens eine Steuereinheit und mindestens ein Datenspeicher umfasst ist, wobei die Anlage ausgebildet ist, das Verfahren nach einem der Ansprüche 1 bis 11 durchzuführen.

## Claims

1. Method for changing software data of a field device, wherein the field device has a multi-sided housing, wherein a first device code that can be detected by an operator using a mobile terminal is applied to or on the housing, which device code is designed as a presence device code that requires the physical presence of the mobile terminal in the near range for detection, wherein the first device code is detected using a read unit of a mobile terminal by way of a first identification step, whereby
- primary device data are received from the field device and/or taken from a central data memory of a higher-level device unit by means of the mobile terminal, wherein the field device is activated directly or by the higher-level device unit, wherein
the primary device data are converted to secondary device data by means of the mobile terminal and/or by means of a central computer or server connected thereto in at least one adjustment step, and the method is **characterized in that**
the completion is carried out in a completion step by storing and/or activating the secondary device data on the field device, wherein a mandatory second identification step is carried out prior to completion via further detection of a second device code by means of the mobile terminal, wherein the secondary device data are transmitted to the field device from the mobile terminal following the second identification step and writing of data to the field device is prevented before the second identification step is carried out, wherein, after a transfer of the secondary device data by the field device and before completion, at least one first verification step is carried out, in which a physical signal that can be detected for the mobile terminal is sent by means of the field device, by means of which signal the correct transfer of the secondary device data from the field device is acknowledged.

2. Method according to Claim 1, **characterized in that** the first and the second device code is formed at least as one of the following code types:
- optically detectable passive code,
- optically detectable active code,
- acoustically detectable code or
- inductive near field code.

3. Method according to one of the preceding claims, **characterized in that**
the first identification step is carried out successively for two or more field devices before the second identification step is carried out, wherein the second identification step and the transmission of secondary device data from the mobile terminal to a single field device must each be carried out completely successively.

4. Method according to Claim 1, **characterized in that** the physical signal is a light and/or sound signal, wherein
a) the light signal
- is transmitted from a single luminaire or LED or a group of luminaires or LEDs to or on the housing of the field device, or
- is emitted by LED luminaires on a connector, or
b) an excited coil, a motor noise or humming or a clocked opening and closing of actuators at a TARGET frequency is used as the source of the sound signal, and/or a frequency is transmitted via a loudspeaker of the field device.

5. Method according to Claim 4, **characterized in that** a second verification step is carried out after the first verification step, using
- the same physical signal and the same code and/or the same code sequence,
- the same physical signal and a different code or a different code sequence,
- a physically different signal and the same code and/or the same code sequence, or
- a physically different signal and a new code or a new code sequence.

6. Method according to Claim 5, **characterized in that**, before the first and/or the second verification step of the field device, a test data set is sent to a higher-level device unit, which test data set is compared with TARGET test data by the higher-level device unit, and **in that**, in the case of agreement, a confirmation data set is sent to the field device, wherein only after the confirmation data set is received by the field device is the first or second verification step and/or the completion step initiated by the field device.

7. Method according to any one of the preceding claims, **characterized in that**, before the first identification step of the field device, a physical notification signal that can be detected by an operator and/or mobile terminal is sent, wherein this notification signal is used, in particular, to locate the field device in the room for the operator.

8. Method according to Claim 5 or 6, **characterized in that**, before the first and/or the second verification step, an operator ID must be sent by the operator to a higher-level device unit, which operator ID is compared with a TARGET operator ID by the higher-level device unit, wherein a release for carrying out the respective verification step, the second identification step or the completion step is sent after agreement from the higher-level device unit.

9. Method according to Claim 2, **characterized in that** the optically detectable passive code is formed as a 2D code, a barcode or a QE code.

10. Method according to Claim 2, **characterized in that** the inductive near field code is designed as a passive transmitter.

11. Method according to Claim 4, **characterized in that** the light signal is transmitted as an LED number, an LED viewing frequency, an LED colour and/or a combination thereof on the housing; and/or
is effected as LED luminaires on an Ethernet connector or an RJ45 connector; and/or
the sound signal is generated by opening and closing actuators at a TARGET frequency.

12. System comprising at least one field device and at least one higher-level device unit connected to the at least one field device, **characterized in that** at least one control unit and at least one data memory is included, wherein the system is designed to carry out the method according to any one of Claims 1 to 11.

## Revendications

1. Procédé de modification de données logicielles d'un appareil de terrain, l'appareil de terrain présentant un boîtier à plusieurs faces, un premier code d'appareil détectable par un opérateur à l'aide d'un terminal mobile étant apposé sur le boîtier ou au niveau de celui-ci, lequel premier code est conçu comme un code de présence nécessitant la présence physique du terminal mobile à proximité pour sa détection, dans lequel la détection du premier code d'appareil est effectuée par une unité de lecture du terminal mobile lors d'une première étape d'identification, de sorte que
- des données d'appareil primaires sont reçues par le terminal mobile en provenance de l'appareil de terrain et/ou extraites d'une mémoire de données centrale d'une unité d'appareil de niveau supérieur, l'appareil de terrain étant activé directement ou par l'unité d'appareil de niveau supérieur, dans lequel
les données d'appareil primaires sont transformées en données d'appareil secondaires au moyen du terminal mobile et/ou d'un ordinateur ou serveur central qui y est connecté lors d'au moins une étape d'ajustement, et le procédé est **caractérisé en ce que**
l'achèvement de la modification est réalisé, lors d'une étape d'achèvement, par le stockage et/ou l'activation des données d'appareil secondaires sur l'appareil de terrain, une deuxième étape d'identification obligatoire étant effectuée avant l'achèvement par une nouvelle détection d'un deuxième code d'appareil au moyen du terminal mobile, les données d'appareil secondaires étant transmises à l'appareil de terrain par le terminal mobile après la deuxième étape d'identification et une écriture de données sur l'appareil de terrain étant empêchée avant la réalisation de la deuxième étape d'identification, dans lequel, après un transfert des données d'appareil secondaires par l'appareil de terrain et avant l'achèvement, au moins une première
étape de vérification est effectuée, lors de laquelle un signal physique détectable par le terminal mobile est envoyé au moyen de l'appareil de terrain, au moyen duquel le transfert correct des données d'appareil secondaires est confirmé.

2. Procédé selon la revendication 1, **caractérisé en ce que** le premier code d'appareil ainsi que le deuxième code d'appareil sont conçus sous la forme d'au moins l'un des types de codes suivants :
- code passif détectable optiquement,
- code actif détectable optiquement,
- code détectable acoustiquement, ou
- code à champ proche inductif.

3. Procédé selon l'une des revendications précédentes, **caractérisé en ce que**
la première étape d'identification est effectuée successivement pour deux appareils de terrain ou plus avant la réalisation de la deuxième étape d'identification, la deuxième étape d'identification et la transmission de données d'appareil secondaires du terminal mobile vers un appareil de terrain individuel devant respectivement être effectuées successivement et intégralement.

4. Procédé selon la revendication 1, **caractérisé en ce que** le signal physique est un signal lumineux et/ou sonore, dans lequel
a) le signal lumineux
- est émis par une lampe ou LED unique, ou par un groupe de lampes ou de LED au niveau du boîtier de l'appareil de terrain ou sur celui-ci, ou
- est émis par des LED situées sur un connecteur, ou encore
b) une bobine excitée, un bruit de moteur ou un bourdonnement, ou une ouverture et une fermeture cadencées d'actionneurs à une fréquence CIBLE, est utilisé comme source du signal sonore, et/ou une fréquence est émise par l'intermédiaire d'un haut-parleur de l'appareil de terrain.

5. Procédé selon la revendication 4, **caractérisé en ce qu'**après la première étape de vérification, une deuxième étape de vérification est effectuée, laquelle utilise
- le même signal physique et le même code et/ou la même séquence de codes,
- le même signal physique et un code différent ou une séquence de codes différente,
- un signal physique différent et le même code et/ou la même séquence de codes ou
- un signal physique différent et un nouveau code ou une nouvelle séquence de codes.

6. Procédé selon la revendication 5, **caractérisé en ce qu'**avant la première et/ou la deuxième étape de vérification, un jeu de données de test est envoyé par l'appareil de terrain à une unité d'appareil de niveau supérieur, lequel jeu de données est comparé par l'unité d'appareil de niveau supérieur à des données de test CIBLES, et **en ce que**, en cas de concordance, un jeu de données de confirmation est envoyé à l'appareil de terrain, la première ou la deuxième étape de vérification et/ou l'étape d'achèvement n'étant déclenchées par l'appareil de terrain qu'après réception du jeu de données de confirmation.

7. Procédé selon l'une quelconque des revendications précédentes, **caractérisé en ce qu'**avant la première étape d'identification, un signal de notification physique détectable par un opérateur et/ou un terminal mobile est envoyé par l'appareil de terrain, le signal de notification servant notamment à localiser l'appareil de terrain dans l'espace pour l'opérateur.

8. Procédé selon la revendication 5 ou 6, **caractérisé en ce qu'**avant la première et/ou la deuxième étape de vérification, un ID d'opérateur doit être envoyé par l'opérateur à une unité d'appareil de niveau supérieur, lequel ID d'opérateur est comparé par l'unité d'appareil de niveau supérieur à un ID d'opérateur CIBLE, une autorisation étant envoyée, en cas de concordance, par l'unité d'appareil de niveau supérieur pour permettre la réalisation de l'étape de vérification respective, de la deuxième étape d'identification ou de l'étape d'achèvement.

9. Procédé selon la revendication 2, **caractérisé en ce que** le code passif détectable optiquement est conçu sous la forme d'un code 2D, d'un code-barres ou d'un code QE.

10. Procédé selon la revendication 2, **caractérisé en ce que** le code à champ proche inductif est conçu sous la forme d'un émetteur passif.

11. Procédé selon la revendication 4, **caractérisé en ce que** le signal lumineux est émis sous la forme d'un nombre de LED, d'une fréquence de clignotement de LED, d'une couleur de LED et/ou d'une combinaison de ceux-ci sur le boîtier ; et/ou
sous forme de LED situées sur un connecteur Ethernet ou un connecteur RJ45 ; et/ou
**en ce que** le signal sonore est produit par une ouverture et une fermeture cadencées d'actionneurs à une fréquence CIBLE.

12. Installation comprenant au moins un appareil de terrain et au moins une unité d'appareil de niveau supérieur connectée audit au moins un appareil de terrain, **caractérisée en ce qu'**il est prévu au moins une unité de commande et au moins une mémoire de données, ladite installation étant conçue pour mettre en œuvre le procédé selon l'une quelconque des revendications 1 à 11.
